# EUROPEAN PATENT SPECIFICATION

(11) **EP 2 463 163 B1**
(45) Date of publication and mention of the grant of the patent: **17.04.2013**
(21) Application number: 10194211.8
(22) Date of filing: 08.12.2010
(51) Int. Cl.: B60T 1/10, B60T 7/04

(54) **A brake system for vehicles with electric drive**
Bremssystem für Fahrzeuge mit einem Elektroantrieb
Système de frein pour véhicules avec commande électrique

(43) Date of publication of application: 13.06.2012
(73) Proprietor: Tofas Turk Otomobil Fabrikasi Anonim Sirketi, 16369 Bursa (TR)
(72) Inventor: Gokce, Can, 16369 Bursa (TR)
(74) Representative: Dericioglu Kurt, Ekin

(56) References cited:
- US-A1- 2008 265 662
- US-A1- 2010 084 915
- US-A1- 2010 187 901

## Description

### Field of the Invention

The present invention relates to a brake system which enables the driver's feel for the pedal to be at the desired level in every stage of the braking in vehicles with electric drive.

### Background of the Invention

In order to prevent the environmental pollution encountered because of the increasing vehicle number today, vehicles having alternative drive systems are manufactured. Some of the said vehicles move by being driven by the electric motor. The drive systems of the said vehicles with electric drive are different from the ones in conventional vehicles as well as their brake systems have differences.

A braking force occurs in proportion with the force applied by the driver to the brake pedal in hydraulic brake systems present in the conventional vehicles. By this means the driver is enabled to brake the vehicle in a desired level after a short adaptation time according to driver's experience.

However in electric vehicles, there are electric brake systems which operate with the hydraulic brake system and enable the vehicle to decelerate by means of converting kinetic energy present on the vehicle that moves, into electrical energy, by the electric machine being operated as a generator. The electric brake systems operate such that they will be in series or parallel with the hydraulic brake systems.

In systems which operates in series with the hydraulic brake systems, the electric braking is activated upon the braking command is received, and the braking starts. Within this time a pedal feel feedback cannot be done to the driver as in conventional systems. In these systems, the pedal feel feedback is felt by the driver after the hydraulic system is activated.

In systems which operate in parallel with the hydraulic brake systems, hydraulic braking is activated at the same time with electrical braking. But the feedback which the driver receives from the pedal is less than the braking force effect because the electric brake system is also activated.

In order that a safe and comfortable driving is performed, it is required that brake pedal feel is fed back to the driver in every stage of the braking such that it will be in proportion with the braking force. With the calibration and sensitivity made during manufacture in mechanical systems used today, it is not possible to calibrate and customize again afterwards. the rate of the electric braking force differs according to situations such as state of charge of the electric vehicle battery, road condition, temperature and like. Because of this reason different braking forces occur in different conditions.

Document US 2010187901 discloses a brake system merging hydraulic and electric brake force and adjusting the feedback force applied to the pedal.

### Summary of the Invention

The objective of the present invention is to realize a brake system which enables the feedback of the pedal feel to the driver in a desired level, with higher accuracy.

Another objective of the present invention is to realize a brake system which enables a pedal feel feedback in proportion with the braking force that vehicle can generate in all circumstances.

A further objective of the present invention is to realize a brake system which can easily be calibrated.

Yet another objective of the present invention is to realize a brake system which can be customized optionally.
The objectives stated above are achieved by a brake system having the technical features of claim 1.

### Detailed Description of the Invention

A brake system realized to fulfill the objective of the present invention is illustrated in the accompanying figure, in which:

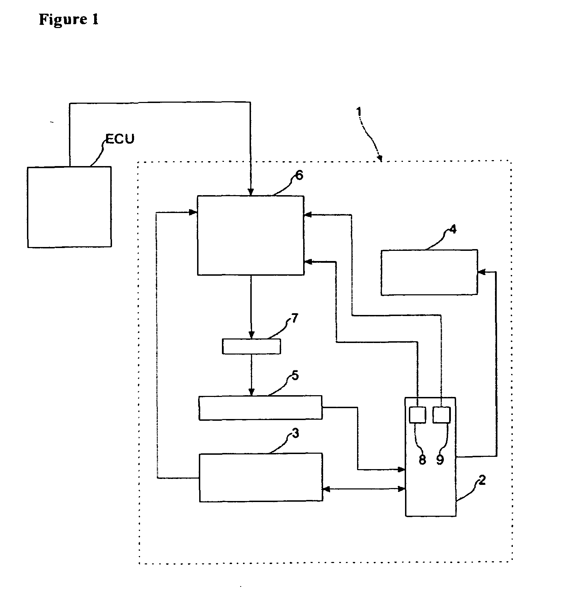

Figure 1 is the schematic view of the inventive brake system

The components shown in the figures are individually numbered where the numbers refer to the following:
1. Brake system
2. Pedal
3. Hydraulic brake system
4. Electric brake system
5. Actuator
6. Control unit
7. Power unit
8. Position sensor
9. Force sensor
ECU: Vehicle control unit

The inventive brake system (1) which is used in vehicles with electric drive comprises:
at least one pedal (2) on which the driver applies force when he/she wants to decrease the speed of the vehicle,
at least one hydraulic brake system (3) which enables the vehicle to decelerate,
at least one electric brake system (4) which operates alone or with the hydraulic brake system (3) in order to decelerate vehicle ,
at least one actuator (5) which is mechanically connected to the pedal (2) and applies feedback force to the pedal (2) in proportion with the braking force for accurate pedal (2) feel such that it will be in proportion with the braking force when the electric brake system (4) is activated,
at least one control unit (6) which receives how much the necessary braking force will be from the vehicle control unit (ECU) and determines the feedback force required to be applied on the pedal (2) in accordance with the predetermined data according to this, and determines the feedback force which the actuator (5) will apply to the pedal (2) in accordance with this force,
at least one power unit (7) which is connected to the actuator (5) from one end and to the control unit (6) from the other end, and enables the actuator (5) to be driven in order that the feedback force determined by the control unit (6) and required to be applied is applied to the pedal by the actuator (5).

The inventive brake system (1) also comprises at least one position sensor (8) which is located on the pedal (2) and enables the actuator (5) to be controlled if it is in necessary position to apply to feedback force towards the pedal (2). The position information of the actuator (5)-that is obtained by the said position sensor (8)- is sent to the control unit (6) via a signal, and the control unit (6) calculates the feedback force, that is applied to the pedal (2) by the actuator (5), by making use of the position information. The control unit (6) compares the calculated feedback force with the force required to be applied and takes no action if these two values coincide with each other, and enables the braking to continue in the same way. In conditions wherein these two values do not coincide with each other, the control unit (6) updates the value of the feedback force required to be applied by the actuator (5), and sends this value to the power unit (7) via a signal. And the power unit (7) drives the actuator (5) according to the incoming value.

In an alternative embodiment of the invention, the control unit (6) calculates the feedback force, that is required to be applied to the pedal (2) by the actuator (5), by making use of the change speed of the pedal (2) position, hydraulic brake system (3) pressure, temperature data and like.

The inventive brake system (1) also comprises at least one force sensor (9) which is located on the pedal (2) and enables the sum of the feedback force, that is applied to the pedal (2) by the actuator (5),and the feedback force, that is applied to the pedal (2) by the hydraulic brake system (3),to be controlled whether it is in a desired level.

The pedal (2), the hydraulic brake system (3) and the electric brake system (4), which are located in the inventive brake system (1), are not going to be described in details because they are known from the applications in the state of the art.

According to the invention, a linear electric machine having a direct driving feature is used as an actuator (5) in order to get a fast response.

The control unit (6) gets the braking force, which is necessary for vehicle to decelerate, from the vehicle control unit (ECU) via a signal. The control unit (6) determines the value of feedback force which required to be applied to the pedal (2) in order that the driver gets feedback about the braking from the pedal (2) via the predetermined data according to value of the said braking force.. Then the control unit (6) transfers the signal, which is required for the actuator (5) to apply force as much as the determined feedback force value onto the pedal (2), to the power unit (7). The power unit (7) drives the actuator (5) that is necessary for it to apply the determined feedback value onto the pedal (2).

In a preferred embodiment of the invention wherein the electric machine is used as an actuator (5), the power unit (7) sends power current to the actuator (5) in suitable intensity in order that determined feedback force, which will be applied to the pedal (2) by the control unit (5), is applied to the pedal (2) by the actuator (5).

In accordance with the data that come from the position sensor (8) located on the pedal (8) and include the instant position of the actuator (5), the control unit (6) controls whether the actuator (5) applies the sufficient feedback force to the pedal (2).

In a preferred embodiment of the invention wherein the electric machine is used as an actuator (5), in accordance with the data that come from the force sensor (9) and include the instant feedback force applied onto the pedal (2), the control unit (6) controls whether the actuator (5) applies sufficient feedback force to the pedal (2).

In one derivative of the preferred embodiment of the present invention wherein the electric machine is used as an actuator (5), the control unit (6) controls whether the actuator (5) applies sufficient feedback force to the pedal (2) according to the power intensity applied to the actuator (5) from the power unit (7).

In cases wherein the electric brake system (4) cannot provide the sufficient brake system required for vehicle to decelerate, the hydraulic brake system (3) is activated by the vehicle control system (ECU). Upon the hydraulic brake system (3) is activated both actuator (5) and the hydraulic brake system (3) start to apply force onto the pedal (2) in order that the driver receives feedback about the brake. In this case, the total feedback force, that is applied to the pedal (2) by the actuator (5) and the hydraulic brake system (3), is transferred to the control unit (6) from the force sensor (9) located on the pedal (2) via a signal. And the control unit (6) determines whether the right force is applied by comparing the incoming feedback force value with the total feedback force which depends on the braking force of that moment and is required to be applied to the pedal (2). In case the control unit (6) detects that the required total feedback force is not applied, the control unit (6) controls the feedback force which the actuator (5) should apply, and updates the feedback force of the actuator (5).

The pedal (2) feedback force corresponding to necessary braking force can be calibrated by the control unit (6) according to vehicle depending on the driver's preference.

By this means the customization of the vehicle about the pedal (2) feel is enabled in accordance with the driver's preference.

By means of the inventive brake system (1) the pedal (2) feel feedback can be made to the driver in a desired level under conditions wherein the hydraulic brake system (3) is deactivated and only the electric brake system (4) is used. Also, the customization of the vehicle is enabled whereby the pedal feedback force value in the control unit (6) of the inventive brake system (1), that are determined depending on the total braking force required for the vehicle to decelerate, can easily be changed.

It is possible to develop various embodiments of the inventive brake system (1). The invention can not be limited to the examples described herein; it is essentially according to the claims.

## Claims

1. A brake system (1) comprising
at least one pedal (2) on which the driver applies force when he/she wants to decrease the speed of the vehicle,
at least one hydraulic brake system (3) which enables the vehicle to decelerate,
at least one electric brake system (4) which operates alone or with the hydraulic brake system (3) in order that the vehicle decelerates,
at least one actuator (5), which is mechanically connected to the pedal (2) and applies feedback force to the pedal (2) in proportion with the braking force for accurate pedal (2) feel such that it will be in proportion with the braking force when the electric brake system (4) is activated, and which is a linear electric machine having direct driving feature in order to get fast response,
at least one control unit (6) which receives how much the necessary braking force will be from the vehicle control unit (ECU) and determines the feedback force required to be applied on the pedal (2) in accordance with the predetermined data according to this, and determines the feedback force which the actuator (5) will apply to the pedal (2) in accordance with this force,
at least one power unit (7) which is connected to the actuator (5) from one end and to the control unit (6) from the other end, and enables the actuator (5) to be driven in order that the feedback force determined by the control unit (6) and required to be applied is applied to the pedal by the actuator (5),
at least one position sensor (8) which is located on the pedal (2) and sends the position information of the actuator (5) to the control unit (6) via a signal in order to control that the actuator (5) is in right position for applying the feedback force towards the pedal (2)
at least one force sensor (9) which is located on the pedal (2) and sends the value of total feedback force that is applied to the pedal (2) to the control unit (6) via a signal in order to control whether the sum of the feedback force, that is applied to the pedal (2) by the actuator (5), and the feedback force that is applied to the pedal (2) by the hydraulic brake system (3),is at the desired level.

2. A brake system (1) according to any one of the preceding claims **characterized by** at least one control unit (6), whereby the pedal feedback force values determined depending on the total braking force required for the vehicle to decelerate can be calibrated depending on the driver's preference, and which thereby enables customization of the vehicle about the pedal (2) feel in accordance with the driver's preference.

3. A brake system (1) according to any one of the preceding claims **characterized by** at least one power unit (7) which sends power current to the actuator (5) in suitable intensity in order that the determined feedback force, which will be applied to the pedal (2) by the control unit (6), is applied to the pedal (2) by the actuator (5).

4. A brake system (1) according to any one of the preceding claims **characterized by** at least one control unit (6) which calculates the feedback force, that is required to be applied to the pedal (2) by the actuator (5), by making use of information such as the pedal (2) position change speed, hydraulic brake system (3) pressure, temperature data.

5. A brake system (1) according to any one of the preceding claims **characterized by** at least one control unit (6) which compares the calculated feedback force with the force required to be applied and takes no action if these two values coincide with each other, and enables the braking to continue in the same way; in conditions wherein these two values do not coincide with each other, updates the value of the feedback force required to be applied by the actuator (5), and sends this value to the power unit (7) via a signal.

6. A brake system (1) according to any one of the preceding claims **characterized by** at least one control unit (6) which controls whether the actuator (5) applies sufficient feedback force to the pedal (2)in accordance with the data coming from the force sensor (9) and including instant feedback force applied on the pedal (2).

7. A brake system (1) according to any one of the preceding claims **characterized by** at least one control unit (6) which controls whether the actuator (5) applies sufficient feedback force to the pedal (2) according to the power intensity applied to the actuator (5) from the power unit (7).

## Patentansprüche

1. Ein Bremssystem (1) umfassend,
mindestens ein Bremspedal (2), worauf der Fahrer/in ggf. Kraft ausübt, wenn er/sie die Geschwindigkeit des Fahrzeuges herabsetzen will,
mindestens ein hydraulisches Bremssystem (3), welches ermöglicht, dass das Fahrzeug abbremst,
mindestens ein elektrisches Bremssystem (4), welches entweder alleine oder gemeinsam mit hydraulisches Bremssystem mitwirkt, damit das Fahrzeug abbremst,
mindestens einen Aktuator (5), welcher mit dem Pedal (2) mechanisch verbunden ist und für das richtige Pedalgefühl (2) auf das Pedal (2) eine mit der Bremskraft proportionale Rückkopplungskraft ausübt, so dass es mit der Bremskraft proportional sein wird, wenn das elektrische Bremssystem (4) aktiviert ist und welcher eine lineare elektrische Maschine ist, die eine direkte Ansteuerungseigenschaft aufweist um eine schnelle Reaktion zu erhalten,
mindestens eine Steuereinheit (6), welche erfasst, wie viele die benötigte Kraft von der Steuereinheit des Fahrzeuges (ECU) sein wird und die Rückkopplungskraft bestimmt, die entsprechend den vorbestimmten Daten danach auf das Pedal (2) auszuüben ist und welche die Rückkopplungskraft bestimmt, die der Aktuator (5) entsprechend dieser Kraft auf das Pedal ausüben wird,
mindestens ein Antriebsaggregat (7), das an einem Ende an den Aktuator (5) angeschlossen und mit dem anderen Ende an die Steuereinheit (6) angeschlossen ist und es ermöglicht den Aktuator (5) anzutreiben um die von der Steuereinheit (6) bestimmten und erforderlich auszuübende Rückkopplungskraft auf das Pedal auszuüben,
mindestens einen Positionssensor (8), der auf dem Pedal (2) angeordnet ist und eine Positionsinformation des Aktuators (5) über ein Signal an die Steuereinheit (6) entsendet, um zu kontrollieren, ob der Aktuator (5) in richtiger Stellung ist, um die Rückkopplungskraft gegen das Pedal (2) ausüben zu können,
mindestens einen Kraftsensor (9) der auf dem Pedal (2) angeordnet ist und den Wert der gesamten Rückkopplungskraft, welche auf das Pedal (2) ausgeübt wurde, über ein Signal an die Steuereinheit entsendet, um zu kontrollieren, ob die Summe der Rückkopplungskraft, welche durch den Aktuator (5) auf das Pedal (2) ausgeübt wurde, sowie die Rückkopplungskraft, welche durch das hydraulische Bremssystem (3) auf das Pedal (2) ausgeübt wurde, auf dem gewünschten Niveau liegt,

2. Ein Bremssystem (1) nach einem der vorangehenden Ansprüche, **gekennzeichnet durch** mindestens eine Steuereinheit (6), wobei die Werte der Pedal-Rückkopplungskräfte, die abhängig von der gesamten, fürs Abbremsen des Fahrzeuges erforderlichen Bremskraft bestimmt werden, können nach Präferenzen des Fahrers abgestimmt werden und welche dabei die Anpassung des Fahrzeuges gemäß Präferenzen des Fahrers nach dem Pedalgefühl (2) gewährleistet.

3. Ein Bremssystem (1) nach einem der vorangehenden Ansprüche, **gekennzeichnet durch** mindestens ein Antriebsaggregat (7), welches den Kraftstrom mit einer angemessener Intensität an Aktuator (5) übermittelt, damit die ermittelte Rückkopplungskraft, die **durch** Steuereinheit (6) auf das Pedal (2) angewendet werden soll, von dem Aktuator (5) auf das Pedal (2) ausgeübt wird.

4. Ein Bremssystem (1) nach einem der vorangehenden Ansprüche, **gekennzeichnet durch** mindestens eine Steuereinheit (6), welche die erforderliche Rückkopplungskraft berechnet, die von dem Aktuator (5) auf das Pedal (2) angewendet werden sollte, wobei die Informationen wie Geschwindigkeit der Positionsveränderung des Pedals (2), Druck im hydraulischen Bremssystem (3), Temperaturdaten herangezogen werden.

5. Ein Bremssystem (1) nach einem der vorangehenden Ansprüche, **gekennzeichnet durch** mindestens eine Steuereinheit (6), welche die berechnete Rückkopplungskraft mit der erforderlichen Kraft, die ausgeübt werden soll, vergleicht und nichts unternimmt, wenn diese beiden Werte zusammenfallen und erlaubt, dass die Abbremsung in der gleichen Art und Weise sich fortsetzt; in Fällen jedoch, in denen diese zwei Werte miteinander nicht übereinstimmen, sie verbessert die erforderliche Rückkopplungskraft, die vom Aktuator (5) angewendet werden soll und übermittelt diesen Wert über ein Signal an Antriebsaggregat (7).

6. Ein Bremssystem (1) nach einem der vorangehenden Ansprüche, **gekennzeichnet durch** mindestens eine Steuereinheit (6), welche prüft nach, ob der Aktuator (5) entsprechend den von dem Kraftsensor (9) stammenden Daten ausreichende Rückkopplungskraft auf das Pedal (2) ausübt und zwar einschließlich der auf das Pedal (2) angewendete momentane Rückkopplungskraft.

7. Ein Bremssystem (1) nach einem der vorangehenden Ansprüche, **gekennzeichnet durch** mindestens eine Steuereinheit (6), welche prüft nach, ob der Aktuator (5) entsprechend der von dem Antriebsaggregat (7) auf den Aktuator (5) angewendete Kraftintensität ausreichende Rückkopplungskraft auf das Pedal (2) ausübt.

## Revendications

1. Un système de freinage (1), comportant au moins une pédale (2) sur laquelle est appliquée une force par le conducteur en cas de besoin de réduire la vitesse du véhicule,
au moins un système de freinage hydraulique assurant le ralentissement du véhicule,
au moins un système de freinage électrique (4) fonctionnant tout seule ou coopérant avec le système de freinage hydraulique (3) pour la ralentissement du véhicule,
au moins un actionneur de commande (5) qui est mécaniquement connecté à la pédale (2) et applique une force de rétroaction sur la pédale (2) à raison de la force de freinage pour un sentiment précis de pédale (2) dans une manière qu'il sera proportionnel à la force de freinage quand le système de freinage électrique (4) est activé, et qui est une machine électrique linéaire possédant une caractéristique de conduite directe afin d'obtenir une réponse rapide,
au moins une unité de control (6) recevant la quantité nécessaire à délivrer par l'unité de control du véhicule (ECU) et déterminant la force de rétroaction devant être appliqué sur la pédale (2) conformément à la donnée prédéterminée en conséquence, et déterminant la force de rétroaction qui sera appliquée par la pédale (2) conformément à cette force,
au moins une unité de puissance (7) connectée au actionneur (5) de l'une extrémité et à l'unité de control (6) de l'autre, et permettant à l'actionneur d'être conduite afin d'appliquer la force de rétroaction déterminée par l'unité de control et devant être appliquée sur la pédale par l'actionneur (5),
au moins un capteur de position (8) situé sur la pédale (2) et envoyant l'information de position de l'actionneur (5) à l'unité de control à travers un signal afin de contrôler que l'actionneur (5) est dans la position correcte pour appliquer la force de rétroaction vers la pédale (2),
au moins un capteur de force (9) situé sur la pédale et envoyant la valeur totale de la force de rétroaction appliqué sur la pédale à l'unité de control (6) à travers un signal afin de contrôler sil la somme de la force de rétroaction appliquée sur la pédale (2) par l'actionneur (5) et la force de rétroaction appliquée sur la pédale (2) par le système de freinage hydraulique (3) sont au niveau désiré,

2. Un système de freinage (1) selon l'une quelconque des revendications précédentes, **caractérisé par** au moins une unité de contrôle (6) par laquelle on peut calibrer les valeurs de force de rétroaction de la pédale déterminé en fonction de la force totale de freinage requise pour accélérer le véhicule selon la préférence du conducteur, et ainsi permettant la personnalisation du véhicule concernant le sentiment de pédale (2) conformément la préférence du conducteur,

3. Un système de freinage selon l'une quelconque des revendications précédentes, **caractérisé par** au moins une unité de puissance (7) envoyant le courant électrique en intensité appropriée à l'actionneur afin d'appliquer la force de rétroaction déterminée qui sera appliqué sur la pédale (2) par l'unité de control (2) est appliquée sur la pédale (2) par l'actionneur (5),

4. Un système de freinage (1) selon l'une quelconque des revendications précédentes, **caractérisé par** au moins une unité de contrôle (6) calculant la force de rétroaction requise pour appliquer sur la pédale (2) par l'actionneur en bénéficiant de l'information tel que la vitesse de changement de position de la pédale (2), la pression du système de freinage hydraulique, et la donnée de température,

5. Un système de freinage selon l'une quelconque des revendications précédentes, **caractérisé par** au moins une unité de contrôle (6) comparant la force de rétroaction calculée avec la force requise pour y appliquer, et ne faisant pas aucun mouvement si ces deux valeurs coïncide avec l'une et l'autre, et permettant la continuation du freinage dans la même direction dans les conditions où ces deux valeurs ne coïncident pas avec l'une et l'autre, mettant à jour la valeur de force rétroactive requise d'être appliqué par l'actionneur (5), et envoyant cette valeur à l'unité de puissance par un signal,

6. Un système de freinage (1) selon l'une quelconque des revendications précédentes, **caractérisé par** au moins une unité de contrôle (6) contrôlant si l'actionneur de commande (5) applique la force de rétroaction suffisante sur la pédale (2) conformément à la donnée venant du capteur de puissance (9) et contenant une force de rétroaction instantanée appliquée sur la pédale (2),

7. Un système de freinage selon l'une quelconque des revendications précédentes, **caractérisé par** au moins une unité de contrôle (6) contrôlant si l'actionneur de commande (5) applique une force de rétroaction suffisante sur la pédale (2) selon l'intensité de puissance appliquée par l'actionneur (5) de l'unité de puissance (7).
